**Europäisches Patentamt**

**European Patent Office**

**Office européen des brevets**

(11) Publication number: **0 152 970**
**B1**

## (12) EUROPEAN PATENT SPECIFICATION

(45) Date of publication of patent specification: **03.05.89**

(21) Application number: **85200031.4**

(22) Date of filing: **16.01.85**

(51) Int. Cl.⁴: **A 01 F 15/08,** B 30 B 9/30, A 01 D 85/00

(54) Baler density control mechanism.

(30) Priority: **18.01.84 US 571772**

(43) Date of publication of application:
**28.08.85 Bulletin 85/35**

(45) Publication of the grant of the patent:
**03.05.89 Bulletin 89/18**

(84) Designated Contracting States:
**DE FR GB**

(56) References cited:
**DE-C- 584 325**
**GB-A-2 042 415**
**US-A-1 631 881**
**US-A-2 478 012**
**US-A-3 350 999**

(73) Proprietor: **FORD NEW HOLLAND N.V.**
**Leon Claeysstraat 3a**
**B-8210 Zedelgem (BE)**

(72) Inventor: **Naaktgeboren, Adrianus**
**Vogelwikkestraat 7**
**B-8211 Veldegem (Zedelgem) (BE)**

(74) Representative: **Vandenbroucke, Alberic T.J.**
**et al**
**Ford New Holland NV. Patent Department Leon**
**Claeysstraat, 3A**
**B-8210 Zedelgem (BE)**

Courier Press, Leamington Spa, England.

## Description

This invention relates generally to agricultural balers and, in particular, to density control mechanisms for such balers.

In the baler art, it is known that bale density may be controlled by changing the position of one or more of the rails of the bale case thereby changing the dimensions, i.e., height and width, of the bale chamber. Various types of mechanisms have been provided for performing this function. US—A—4.125.071 discloses one such type of mechanism that includes an upper channel member disposed above the top rail of the bale case and a lower channel member disposed below the bottom rail of the bale case. These upper and lower channel members are connected by rods having integrally formed crank handles at their upper ends. When the crank handles are turned in one direction, the upper channel member pushes the top rail of the bale case downwardly toward the bottom rail thereof to reduce the height of the baling chamber.

US—A—1.631.881 discloses a conventional rectangular baler having conventional top and bottom bale tensioning rails and additional bale engaging members fixedly coupled to the position control means for the tensioning rails. These additional bale engaging members are provided at the transverse opposite sides of the bale case. To the extent that these bale engaging members are very small when compared to conventional bale tensioning rails on the one hand and that these members are provided generally at the discharge end of the bale case on the other hand, they cannot be qualified as bale tensioning members. Accordingly, US—A—1.631.881 is concerned with a baler having only one pair of bale tensioning rails and as such, the arrangement thereof is not suitable for use on medium and large size rectangular balers.

US—A—4.037.528 discloses another such type of mechanism that includes hydraulic cylinder devices connected at their ends to upper and lower bell cranks which carry rollers contacting the side rails of the bale case. The upper bell cranks are interconnected by a cross beam member attached to the top rail of the bale case. The lower bell cranks are mounted on lugs connected to the bottom rail of the bale case. When the hydraulic cylinder devices are contracted, the upper and lower bell cranks are pivoted in a manner to move the side rails of the bale case toward each other to reduce the width of the baling chamber. The pivoting movement of the upper bell cranks also simultaneously causes the top rail of the bale case to be moved downwardly toward thme bottom rail thereof to reduce the height of the baling chamber. The mechanism according to US—A—4.037.528 has the advantage that the relative position of all four sides of the bale case is adjustable whereby bale density can be controlled more adequately, especially when so-called large or medium size square balers are concerned. Also, bales of uniform density may be made with a baler of the type as shown in this patent. However, the mechanism according to US—A—4.037.528 is fairly complex in its design and has a large number of components whereby this mechanism is relatively expensive in its manufacture.

It is therefore an object of the present invention to provide a baler with a bale density control mechanism with a minimum number of components and which is simple in design and inexpensive in its manufacture and which nevertheless enables the forming of bales of acceptable and uniformn density without any excessive penetration of any of the tension rails or portions thereof into any side of the bales being formed. The bale density control mechanism according to the invention equally allows adjustment of the relative position of all four sides of the bale case and is particularly useful on so-called large and medium-size square balers.

According to the present invention a baler is provided having:

a bale case of generally rectangular cross section and including a pair of opposed bale tensioning rails and a pair of opposed bale engaging members; said bale engaging members being positioned generally perpendicularly to the respective bale tensioning rails; and

control means for changing the relative position of the rails and the bale engaging members, said control means comprising:

a pair of linkage members pivotally connected at one end to a first rail of said pair of rails and operatively associated with the second rail of said pair of rails on the one hand and with respectively the first and second members of said pair of bale engaging members on the other hand;

a lever member pivotally connected to the other end of each linkage member with both lever members being operatively associated with the second rail of the first pair of rails; and

single power means operatively associated with the lever members and the linkage members to move said lever members and said linkage members toward, respectively away from each other, thereby causing adjustment of the relative position of the bale engaging members and also simultaneously causing adjustment of the position of the second rail relative to the first rail.

The invention is characterized in that:

the bale engaging members are in the form of further bale tensioning rails; the first and further pairs of bale tensioning rails together generally defining the sides of said rectangular cross sectional shape;

each bale tensioning rail of said further pair of bale tensioning rails is pivotally connected, generally at the middle of its width defining in part said rectangular cross sectional shape of the bale case, to a respective linkage member intermediate the opposite ends thereof; the arrangement being such that, the rails of said further pair of bale tensioning rails, in operation, remain generally parallel to each other and generally perpendicular to the rails of the first pair of bale tensioning rails; and

the linkage members are operatively associated with the second rail of the first pair of bale tensioning rails through the intermediary of said lever members pivotally coupling said linkage members to said single power means.

In a preferred embodiment the first and second rails of the first and further pair of rails are formed by the bottom and top rails, respectively the opposed side rails. The control means further also comprise a bottom member located adjacent the bottom rail and a top member located adjacent and connected to the top rail. The arrangement is such that the linkage members are pivotally connected at their one end to the bottom rail via said bottom member and that the lever members operatively control the position of the top rail via said top member.

The bottom member preferably extends transversely underneath the bottom rail and the linkage members are pivotally connected to the outer ends thereof and extend generally upright. The linkage members support the side rails. The lever members carry rollers for operatively contacting the top member.

A baler in accordance with the present invention will now be described in greater detail and by way of example, with reference to the accompanying drawings. Other aspects and characteristics of the invention not mentioned above but claimed in the appended claims will be apparent therefrom. In the accompanying drawings:

Fig. 1 is a side elevational view of a bale case embodying the preferred embodiment of the control mechanism of the present invention; and

Fig. 2 is an enlarged sectional view taken along lines 2—2 in Fig. 1 showing one position of the control mechanism in full lines and another position of the control mechanism in phantom.

In the following description, it is to be understood that such terms as: "forward", "rearward", "left", "right", "top", "bottom", "side", "first", "second", etc. are words of convenience and are not to be construed as limiting terms.

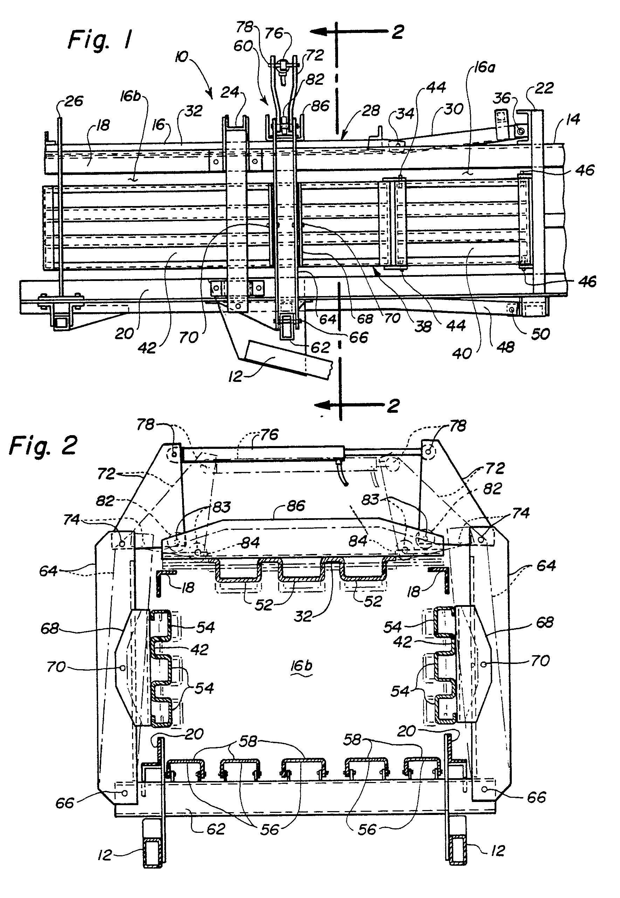

Referring to Fig. 1, a bale case 10 of an agricultural baler is supported on a frame 12. The bale case 10 includes a forward portion 14 (only a small part of which is shown) and a rearward portion 16. A plunger (not shown) is reciprocably disposed in the forward portion 14 of the bale case 10 to form crop material into rectangular bales. These rectangular bales are pushed through the rearward portion 16 of the bale case 10 where they are bound in a conventional manner with suitable material, such as twine, before being discharged from the baler.

The bale case rearward portion 16 includes upper corner rails 18 and lower corner rails 20. See also Fig. 2. These upper and lower corner rails 18, 20 are held stationary by collar-like frames 22, 24, 26 which extend around the outside of the bale case rearward portion 16 and are rigidly connected, such as by bolts or welding, to the corner rails 18, 20. The bale case rearward portion 16 also includes a top center rail 28 comprised of a first section 30 and a second section 32 pivotally connected together at 34. The first section 30 of the top center rail 28 is also pivotally connected at 36 to the frame 22. This type of top center rail is also disclosed in U.S. Patent No. 4,125,071. The bale case rearward portion 16 further includes identical, opposite side rails 38 each formed of a first section 40 and a second section 42 pivotally connected together by pins 44. The first section 40 of each side rail 38 is also pivotally connected to the frame 22 by pins 46. The bale case rearward portion 16 also has a bottom rail 48 fixed at 50 to the frame 22.

The first and second sections 30, 32 of the top rail 28 and the first and second sections 40, 42 of the side rails 38 are each preferably formed of a piece of sheet metal folded into a corrugated pattern as best seen in cross-section in Fig. 2. The top rail first and second sections 30, 32 have relatively flat surfaces 52 which engage the top of a bale moving through the bale case 10. The side rail first and second sections 40, 42 have relatively flat surfaces 54 which engage the sides of a bale moving through the bale case 10. The bottom rail 48 includes a series of inverted generally U-shaped channel members 56 arranged side-by-side. The bottom rail members 56 have relatively flat surfaces 58 on which a bale rests while moving through the bale case 10.

The top rail first section 30 and the underlying portion of the bottom rail 48 are inclined relative to each other so that the vertical distance between their opposed surfaces 52 and 58 gradually decreases from right to left in Fig. 1. This type of arrangement between the top and bottom rails of a bale case is also disclosed in U.S. Patent No. 4,125,071. The side rail first sections 40 also are inclined relative to each other so that also the horizontal distance between their opposed surfaces 54 gradually decreases from right to left in Fig. 1. The top rail second section 32 and the underlying portion of the bottom rail 48 will be maintained substantially parallel to each other so that the vertical distance between their opposed surfaces 52 and 58 is substantially constant from right to left in Fig. 1. Also the side rail second sections 42 will be maintained substantially parallel to each other so that also the horizontal distance between their opposed surfaces 54 is substantially constant from right to left in Fig. 1.

With the top rail 28, the side rails 38, and the bottom rail 48 formed and arranged as described above, the bale case rearward portion 16 has a chamber area 16a of gradually tapering height and width and a chamber area 16b of substantially uniform height and width. As is well known in the baler art, this causes bales to be formed which are of satisfactory density but with no distortion in shape.

According to the present invention, a control mechanism 60 is provided for changing the positions of the first and second sections 30, 32 of the top rail 28 and for changing the positions of the first and second sections 40, 42 of the side rails 38 to adjust the relative position of the top and bottom rails 28, 48, respectively of the opposed side rails 38 and thus also to adjust the shape and dimension of the chamber area 16a as well as the dimension of the chamber area 16b of the bale case rearward portion 16 to thereby adjust bale density. The control mechanism 60 includes a bottom member 62 which forms part of the frame 12, extends transversely of the bale case rearward portion 16 and is located underneath the bottom rail 48. The control mechanism 60 further also comprises linkage or side members 64 pivoted at their lower ends by pins 66 to the outer ends of the bottom member 62. Brackets 68, pivoted by pins 70 to the linkage members 64, are rigidly attached to the side rail second sections 42. Lever members 72 are pivoted by pins 74 to the upper ends of the linkage or side members 64. The side members 64, brackets 68 and pins 70 also provide the main support for the side rail first and second sections 40, 42.

Power means such as a hydraulic cylinder unit 76, of the contracting type, is pivotally connected at its ends by pins 78 to the lever members 72. The lever members 72 carry rollers 82 on pins 83 which engage portions 84 of a top member 86 that is located above and secured to the top rail second section 32. The top member 86 also supports the top rail first and second sections 30, 32. The bottom member 62 is preferably of generally rectangular cross-section while the side members 64 and the top member 86 are preferably of generally U-shaped cross-section.

The control mechanism 60 is operated by contracting the hydraulic cylinder unit 76. When the hydraulic cylinder unit 76 is contracted from, the full line position to the phantom position shown in Fig. 2, the lever members 72 are moved toward each other and pivoted inwardly on the pins 74 causing the side members 64 to be pivoted inwardly on the pins 66, and also simultaneously causing the top member 86 to be pushed downwardly by the rollers 82.

This causes the side rail second sections 42 to be moved inwardly toward each other to reduce the horizontal distance between their opposed surfaces 54. The side rail second sections 42 remain parallel to each othmer due to the fact that the side members 64 are pivoted by the pins 70 to the brackets 68. The inward movement of the side rail second sections 42 causes the side rail first sections 40 to be pivoted via the pins 44 and 46 to a position where they become inclined at a greater angle with respect to each other. The side rail first sections 40 are then positioned so that the horizontal distance between their opposed surfaces 54 decreases at a faster rate from right to left in Fig. 1. Simultaneously with the inward movement of the side rail, second sections 42, the top rail second section 32 is moved downwardly toward the bottom rail 48 to reduce the vertical distance between their opposed surfaces 52 and 58. The top rail second section 32 remains parallel to the underlying portion of the bottom rail 48. The downward movement of the top rail second section 32 causes the top rail first section 30 to be pivoted via the pins 34 and 36 to a position where it becomes inclined at a greater angle with respect to the bottom rail 48. The top rail first section 30 is then positioned relative to the bottom rail 48 so that the vertical distance between their opposed surfaces 52 and 58 decreases at a faster rate from right to left in Fig. 1.

It will be understood from the foregoing description that the control mechanism 60 is utilized to change the height and width of the bale chamber area 16b as well as the degree of, tapering of the bale chamber area 16a as seen in the direction of, movement of bales through the bale case 10 in order to adjust bale density. By contracting the hydraulic cylinder unit 76, the bale chamber area 16b is generally reduced in height and width and the bale chamber area 16a is caused to taper at a greater rate as seen in the direction of movemment of bales through the bale case 10, thereby usually resulting, during operation, in higher bale density. Conversely, by extending the hydraulic cylinder unit 76, the bale chamber area 16b is generally enlarged in height and width and the bale chamber area 16a is caused to taper to a lesser degree thereby usually resulting, during operation, in lower bale density.

The lever members 72 are each constructed so that the distance between the pins 74 and 83 divided by the distance between the pins 78 and 83 is equal to the combined area of the surfaces 54 of one side rail second section 42 divided by the combined area of the surfaces 52 of the top rail second section 32. With the lever members 72 constructed in this manner, the side rail second sections 42 and the top rail second section 32 apply equal surface pressure on all sides of a bale which results in uniform bale density. It is further noticed that the pivot points 74, 83, 78 of the lever members 72 define a triangle.

The control mechanism 60 is positioned at a location along the length of the bale case rearward portion 16 as shown in Fig. 1 which causes the top rail second section 32 to remain parallel to the underlying portion of the bottom rail 48 and which also causes the side rail second sections 42 to remain parallel to each other. More particularly, the control mechanism 60 is provided generally at the middle of the total length of the bale tension rails 28, 38, 48 on the one hand and generally at one third of the length of the second sections 32, 42, of the top and side rails 28, 38, as seen in the direction of movement of the bales through the bale case 10, on the other hand.

From the preceding description it will be apparent that a baler is provided with a bale density control mechanism which comprises a minimum number of components and which is simple in design and inexpensive in manufacture. Yet the mechanism enables the forming of bales of acceptable amd uniform density without any excessive penetration of any of the tension rails or portions thereof into any side of the bales being formed.

## Claims

1. A baler having:

a bale case (10) of generally rectangular cross section and including a pair of opposed bale tensioning rails (48, 28) and a pair of opposed bale engaging members (38); said bale engaging members (38) being positioned generally perpendicularly to the respective bale tensioning rails (48, 28); and,

control means (60) for changing the relative position of the rails (48, 28) and the bale engaging members (38); said control means (60) comprising:

a pair of linkage members (64) pivotally connected at one end to a first rail (48) of said pair of rails (48, 28) and operatively associated with the second rail (28) of said pair of rails (48, 28) on the one hand and with respectively the first and second members (38) of said pair of bale engaging members (38) on the other hand;

a lever member (72) pivotally connected to the other end of each linkage member (64) with both lever members (72) being operatively associated with the second rail (28) of the first pair of rails (48, 28); and

single power means (76) operatively associated with the lever members (72) and the linkage members (64) to move said lever members (72) and said linkage members (64) toward, respectively away from each other, thereby causing adjustment of the relative position of the bale engaging members (38) and also simultaneously causing adjustment of the position of the second rail (28) relative to the first rail (48), characterized in that:

the bale engaging members (38) are in the form of further bale tensioning rails; the first and further pairs of bale tensioning rails (48, 28 resp 38) together generally defining the sides of said rectangular cross sectional shape;

each bale tensioning rail (38) of said further pair of bale tensioning rails (38) is pivotally connected, generally at the middle of its width defining in part said rectangular cross sectional shape of the bale case (10), to a respective linkage member (64) intermediate the opposite ends thereof; the arrangement being such that, the rails (38) of said further pair of bale tensioning rails (38), in operation, remain generally parallel to each other and generally perpendicular to the rails of the first pair of bale tensioning rails (48, 28); and

the linkage members (64) are operatively associated with the second rail (28) of the first pair of bale tensioning rails (48, 28) through the intermediary of said lever members (72) pivotally coupling said linkage members (64) to said single power means (76).

2. A baler according to claim 1, characterized in that the first and second rails of the first and further pairs of rails are formed by the bottom and top rails (48, resp. 28), respectively the opposed side rails (38) and in that

the control means (60) further also comprise

a bottom member (62) located adjacent the bottom rail (48); the arrangement being such that the linkage () members 64 are pivotally connected to the bottom rail (48) via said bottom member (62); and

a top member (86) located adjacent amd connected to the top rail (28); the arrangement being such that the lever members (72) operatively control the position of the top rail (28) via said top member (86).

3. A baler according to claim 2 characterized in that the bottom member (62) extends transversely underneath the bottom rail (48) with the linkage members (64) being pivotally connected to the outer ends thereof and extending generally upright; said linkage members (64) supporting the side rails (38).

4. A baler according to claim 2 or 3, characterized in that each lever member (72) carries a roller (82) for operatively contacting the top member (86).

5. A baler according to claim 4, characterized in that the pivot points (78, 74) between each lever member (72) and the power means (76), respectively the associated linkage member (64), and the mounting axis (83) of the roller (82) on said lever member, (72) are positioned the corners of a triangle.

6. A baler according to claim 5, characterized in that the distance between the linkage member pivotal coupling (74) to the associated lever member (72) and the roller mounting axis (83) on said lever member (72) on the one hand, divided by the distance between said roller mounting axis (83) and the power means pivotal coupling (78) to said lever member (72) on the other hand, is equal to one side rail effective pressure surface (54) divided by the top rail effective pressure surface (52).

7. A baler according to any of the preceding claims characterized in that the control means (60) are provided substantially at the middle of the length of the rails (48, 28, 38).

8. A baler according to any of the claims 2 to 7, characterized in that the top rail (2 each comprise first and second sections (30, 32, respectively 40, 42); said first and second sections of each rail being pivotally connected together and the arrangement being such that the top rail first sectionn (30) is inclined relative to the bottom rail (48) while that the top rail second section (32) is maintained substantially parallel to an underlying portion of said bottom rail (48), on the one hand, and that the side rail first sections (40) are inclined relative to each other while that the side rail second sections (42) are maintained substantially parallel to each other, on the other hand.

9. A baler according to claim 8, characterized in that the linkage members (64) are pivotally connected to the respective side rail second sections (42) while that the top member (86) is connected to the top rail second section (32).

10. A baler according to claim 9, characterized in that the control means (60) are provided substantially at one third of the length of the top and side rail second sections (32, resp. 42) when seen in the direction of movement of bales through the bale case (10).

11. A baler according to any of the preceding claims characterized in that the single power means comprise a hydraulic cylinder unit (76) pivotally connected at its ends (78) to the lever members (72).

**Patentansprüche**

1. Ballenpresse mit

einem Ballengehäuse (10) mit allgemein rechtwinkligem Querschnitt, das zwei gegenüberliegende Ballenspannschienen (48, 28) und zwei gegenüberliegende Balleneingriffsteile (38) einschließt, wobei die Balleneingriffsteile (38) allgemein senkrecht zu den jeweiligen Ballenspannschienen (48, 28) angeordnet sind, und

Steuereinrichtungen (60) zur Änderung der Relativstellung der Schienen (48, 28) und der Balleneingriffsteile (38), wobei die Steuereinrichtungen (60) folgende Teile umfassen:

ein Paar von Gestängeteilen (64), die schwenkbar an einem Ende mit einer ersten Schiene (48) des Paares von Schienen (48, 28) verbunden sind und die betriebsmäßig mit der zweiten Schiene (28) des Paares von Schinen (48, 28) einerseits und jeweils mit den ersten und zweiten Balleneingriffsteilen (38) des Paares von Balleineingriffsteilen (38) andererseits verbunden sind,

ein Hebelbauteil (72), das schwenkbar mit dem anderen Ende jedes Gestängebauteiles (64) verbunden ist, wobei beide Hebelbauteile (72) betriebsmäßig der zweiten Schiene (78) des ersten Paares von Schienen (48, 28) zugeordnet sind, und

eine einzige Kraftbetätigungseinrichtung (76), die betriebsmäßig mit den Hebelbauteilen (72) und den Gestängeteilen (64) verbunden ist, um die Hebelbauteile (72) und die Gestängeteile (64) in Richtung aufeinander bzw. voneinander fort zu bewegen, wodurch eine Einstellung der Relativposition der Balleneingriffsteile (38) und gleichzeitig eine Einstellung der Position der zweiten Schiene (28) gegenüber der ersten Schiene (48) hervorgerufen wird, dadurch gekennzeichnet, daß

die Balleneingriffsteile (38) die Form von weiteren Ballenspannschienen aufweisen, wobei die ersten und weiteren Paare von Ballenspannschienen (48, 28 bzw. 38) zusammen allgemein die Seiten der rechtwinkligen Querschnittsform bilden,

jede Ballenspannschiene (38) des weiteren Paares von Ballenspannschienen (38) schwenkbar allgemein an der Mitte ihrer Breite, die teilweise die rechtwinklige Querschnittsform des Ballengehäuses (10) bildet, mit einem jeweiligen Gestängeteil (64) zwischen dessen gegenüberliegenden Enden verbunden ist, wobei die Anordnung derart ist, daß die Schienen (38) des weiteren Paares von Ballenspannschienen (38) im Betrieb allgemein parallel zueinander und allgemein senkrecht zu den Schienen des ersten Paares von Ballenspannschienen (48, 28) bleiben, und

die Gestängeteile (64) betriebsmäßig mit der zweiten Schiene (28) des ersten Paares von Ballenspannschienen (48, 28) über die Hebelbauteile (72) verbunden sind, die die Gestängeteile (64) schwenkbar mit dem einzigen Kraftbetätigungsteil (76) koppeln.

2. Ballenpresse nach Anspruch 1, dadurch gekennzeichnet,

daß die ersten und zweiten Schienen des ersten und weiteren Paares von Schienen durch untere und obere Schienen (48 bzw. 28) bzw. durch die gegenüberliegenden Seitenschienen (38) gebildet sind, und daß

die Steuereinrichtungen (60) weiterhin folgende Teile umfassen:

ein Bodenteil (62), das benachbart zur Bodenschiene (48) angeordnet ist, wobei die Anordnung derart ist, daß die Gestängeteile (64) schwenkbar mit der Bodenschiene (48) über das Bodenteil (62) verbunden sind, und

ein Oberteil (86), das benachbart zu der oberen Schiene (28) angeordnet und mit dieser verbunden ist, wobei die Anordnung derart ist, daß die Hebelbauteile (72) betriebsmäßig die Position der oberen Schiene (28) über das Oberteil (86) steuern.

3. Ballenpresse nach Anspruch 2, dadurch gekennzeichnet, daß sich das Bodenteil (62) in Querrichtung unterhalb der Bodenschiene (48) erstreckt, wobei die Gestängeteile (64) schwenkbar mit den äußeren Enden des Bodenteils verbunden sind und sich allgemein aufrechtstehend von diesem erstrecken, und daß die Gestängeteile (64) die Seitenschienen (38) haltern.

4. Ballenpresse nach Anspruch 2 oder 3, dadurch gekennzeichnet, daß jedes Hebelbauteil (72) eine Rolle (82) zur betriebsmäßigen Berührung mit dem Oberteil (86) trägt.

5. Ballenpresse nach Anspruch 4, dadurch gekennzeichnet, daß die Schwenkpunkte (78, 74) zwischen jedem Hebelbauteil (72) und dem Kraftbetätigungsteil (76) bzw. dem zugehörigen Gestängeteil (64) und die Befestigungsachse (83) der Rolle (82) auch dem Hebelbauteil (72) an den Ecken eines Dreieckes angeordnet sind.

6. Ballenpresse nach Anspruch 5, dadurch gekennzeichnet, daß der Abstand zwischen der Schwenkverbindung (64) des Gestängeteils mit dem zugehörigen Hebelbauteil (72) und der Rollenbefestigungsachse (83) an dem Hebelbauteil (72) einerseits dividiert durch den Abstand zwischen der Rollenbefestigungsachse (83) und der Schwenkverbindung (78) zwischen dem Kraftbetätigungsteil und dem Hebelbauteil (72) andererseits gleich der effektiven Druckoberfläche (54) einer Seitenschiene dividiert durch die effektive Druckoberfläche (52) der oberen Schiene ist.

7. Ballenpresse nach einem der vorherigen Ansprüche, dadurch gekennzeichnet, daß die Steuereinrichtungen (60) im wesentlichen in der Mitte der Länge der Schienen (48, 28, 38) angeordnet sind.

8. Ballenpresse nach einem der Ansprüche 2—7, dadurch gekennzeichnet, daß die obere Schiene (28) und die Seitenschienen (38) jeweils erste und zweite Abschnitte (30, 32 bzw. 40, 42) umfassen, daß die ersten und zweiten Abschnitte jeder Schiene schwenkbar miteinander verbunden sind, und daß die Anordnung derart ist, daß einereseits der erste Abschnitt (30) der oberen Schiene gegenüber der Bodenschiene (48) geneigt ist, während der zweite Abschnitt (32) der oberen Schiene im wesentlichen parallel zu einem darunterliegenden Teil der Bodenschiene (48) gehalten ist, und daß andererseits die ersten Abschnitte (40) der Seitenschiene relativ zueinander geneigt sind, während die zweiten Abschnitte (42) der Seitenschienen im wesentlichen parallel zueinander gehalten werden.

9. Ballenpresse nach Anspruch 8, dadurch gekennzeichnet, daß die Gestängeteile (64) schwenkbar mit den jeweiligen zweiten Abschnitten (42) der Seitenschienen verbunden sind, während das Oberteil (86) mit dem zweiten Abschnitt (32) der oberen Schiene verbunden ist.

10. Ballenpresse nach Anspruch 9, dadurch gekennzeichnet, daß die Steuereinrichtungen (60) im wesentlichen bei einem Drittel der Länge der zweiten Abschnitte (32) bzw. (42) der oberen und der Seitenschienen bei Betrachtung in der Bewegungsrichtung der Ballen durch das Ballengehäuse (10) angeordnet sind.

11. Ballenpresse nach einem der vorherigen Ansprüche, dadurch gekennzeichnet, daß das einzige Kraftbetätigungsteil eine Hydraulikzylindereinheit (76) umfaßt, die an ihren Enden (78) schwenkbar mit den Hebelbauteilen (72) verbunden ist.

**Revendications**

1. Ramasseuse-presse comportant:

un carter à balles (10) qui présente, dans l'ensemble, une section transversale rectangulaire et comprend une paire de rails de tension de balles opposés (48, 28) et une paire d'organes de retenue de balles opposés (38); lesdits organes de retenue de balles (38) étant positionnés, d'une manière générale, perpendiculairement aux rails de tension de balles (48, 28) respectifs; et des moyens de réglage (60) destinés à modifier la position relative des rails (48, 28) et des organes de retenue de balles (38), lesdits moyens de réglage (60) comportant:

deux organes de liaison (64) reliés à pivotement, au niveau de l'une de leurs extrémités, à un premier rail (48) de ladite paire de rails (48, 28) et associés d'une manière fonctionnelle au second rail, (28) de ladite paire de rails (48, 28), d'une part, et respectivement aux premier et second organes (38) de ladite paire d'organes de retenue de balles (38), d'autre part;

un organe formant levier (72) accouplé à pivotement avec l'autre extrémité de chacun des organes de liaison (64), les deux organes de liaison (72) étant associés d'une manière fonctionnelle au second rail (28) de la première paire de rails (48, 28); et

un moyen moteur unique (76) associé d'une manière fonctionnelle aux organes formant leviers (72) et aux organes de liaison (64) afin de déplacer lesdits organes formant leviers (72) et lesdits organes de liaison (64) en direction, respectivement à distance, les uns des autres, pour ainsi entraîner un ajustement de la position relative des organes de retenue de balles (38) ainsi que, simultanément, de la position du second rail (28) par rapport au premier rail (48), caractérisée en ce que:

les organes de retenue de balles (38) se présentent sous la forme de seconds rails de tension de balles; les première et seconde paires de rails de tension de balles (48, 28, respectivement 38) définissant conjointement, dans l'ensemble, les côtés de ladite configuration de t sec ion transversale rectangulaire;

chacun des rails de tension de balles (38) de ladite seconde paire de rails de tension de balles (38) est relié à pivotement, sensiblement au milieu de sa largeur définissant en partie ladite configuration de section transversale rectangulaire du carter à balles (10), à un organe de liaison (64) respectif, en un point situé entre les extrémités opposées de celui-ci; la disposition étant telle qu'en fonctionnement, les rails (38) de ladite seconde paire de rails de tension de balles (38) restent sensiblement parallèles les uns aux autres et perpendiculaires aux rails de la première paire de rails de tension de balles (48, 28); et

les organes de liaison (64) sont associés d'une manière fonctionnelle au second rail (28) de la première paire de rails de tension de balles (48, 28) par l'intermédiaire desdits organes formant leviers (72) qui relient a pivotement lesdits organes de liaison 6) audit moyen moteur unique (76).

2. Ramasseuse-presse selon la revendication 1, caractérisée en ce que

les premiers et seconds rails des première et seconde paires m de rails sont formés par les rails inférieur et supérieur (48, respectivement 28), respectivement les rails latéraux opposés (38), et en ce que

les moyens de réglage (60) comportent également

un organe inférieur (62) situé à proximité du rail inférieur (48); la disposition étant telle que les organes de liaison (64) sont reliés à pivotement au rail inférieur (48) par l'intermédiare dudit organe inférieur (62); et

un organe supérieur (86) situé à proximité du rail supérieur (28) et relie a celui-ci; la disposition etant telle que les organes formant leviers (72) règlent d'une manière fonctionnelle la position du rail supérieur (28) par l'intermédiaire dudit organe supérieur (86).

3. Ramasseuse-presse selon la revendication 2, caractérisée en ce que l'organe inférieur (62) s'étend transversalement sous le rail inférieur (48), tandis que les organes de liaison (64) sont reliés à pivotement aux extrémités extérieures de celui-ci et s'étendent, dans l'ensemble, verticalement; lesdits organes de liaison (64) supportant les rails latéraux (38).

4. Ramasseuse-presse selon la revendication 2 ou 3, caractérisée en ce que chacun des organes formant leviers (72) porte un galet (82) destiné à venir en contact fonctionnel avec l'organe supérieur (86).

5. Ramasseuse-presse selon la revendication 4, caractérisée en de que les points de pivotement (78, 74) entre chacun des organes formant leviers (72) et le moyen moteur (76), respectivement l'organe de liaison associé (64), et l'axe de montage (83) du galet (82) prévu sur ledit organe formant levier (72), sont situés au niveau des angles d'un triangle.

6. Ramasseuse-presse selon la revendication 5, caractérisée en ce que la distance qui sépare l'accouplement pivotant d'organe de liaison (74) avec l'organe formant levier (72) associé et l'axe de montage de galet (83) prévu sur ledit organe formant levier (72), d'une part, divisée par la distance qui sépare ledit axe de montage de galet (83) et l'accouplement pivotant de moyen moteur (78) avec ledit organe formant levier (72), d'autre part, est égale à l'une des surfaces de pression effective de rails latéraux (54) divisée par la surface de pression effective de rail supérieur (52).

7. Ramasseuse-presse selon l'une quelconque des revendications précédentes, caractérisée en ce que les moyens de réglage (60) sont prévus sensiblement au milieu de la longueur des rails (48, 28, 38).

8. Ramasseuse-presse selon l'une quelconque des revendications 2 à 7, caractérisée en ce que le rail supérieur (28) et les rails latéraux (38) se composent respectivement de première et seconde sections (30, 32, respectivement 40, 42); lesdites première et seconde aections de chacun des rails étant reliées entre elles à pivotement et la disposition étant telle que, d'une part, la première section (30) du rail supérieur est inclinée par rapport au rail inférieur (48), tandis que la seconde section (32) du rail supérieur est maintenue sensiblement parallèle à une partie sous-jacente dudit rail inférieur (48), et que, d'autre part, les premières sections (40) des rails latéraux sont inclinées les unes par rapport aux autres, tandis que lea secondes sections (42) des rails latéraux sont maintenues sensiblement parallèles entre elles.

9. Ramasseuse-presse selon la revendication 8, caractérisée en ce que les organes de liaison (64) sont reliés à pivotement aux secondes sections (42) respectives des rails latéraux, tandis que l'organe supérieur (86) est relié à la seconde section (32) du rail supérieur.

10. Ramasseuse-presse selon la revendication 9, caractérisée, en ce que les moyens de réglage (60) sont, lorsqu'on les considère dans le sens de déplacement de balles à travers le carter à balles (10), prévus sensiblement au niveau d'un tiers de la longueur des secondes sections (32, respectivement 42) des rails supérieur et latéraux.

11. Ramasseuse-presse selon l'une quelconque des revendications précédentes, caractérisée en ce que le moyen moteur unique consiste en un ensemble de cylindre hydraulique (76) accouplé à pivotement, au niveau de ses extrémités (78), avec les organes formant leviers (72).

Fig. 1

Fig. 2